# EUROPÄISCHE PATENTSCHRIFT

(11) **EP 1 564 157 B1**
(45) Veröffentlichungstag und Bekanntmachung des Hinweises auf die Patenterteilung: **18.11.2015**
(21) Anmeldenummer: 05001296.2
(22) Anmeldetag: 22.01.2005
(51) Int. Cl.: B65D 88/00, B65D 88/12, A01D 41/12

(54) **Vorrichtung zur Erweiterung von Behältervolumen**
Device for enlarging the volume of containers
Dispositif pour agrandir le volume des conteneurs

(30) Priorität: 16.02.2004 DE 102004007673
(43) Veröffentlichungstag der Anmeldung: 17.08.2005
(73) Patentinhaber: CLAAS Selbstfahrende Erntemaschinen GmbH, 33428 Harsewinkel (DE)
(72) Erfinder: Zeuner, Maik, 33607 Bielefeld (DE); Theißing, Gerhard, 33428 Harsewinkel (DE); Spechtel, Josef, 33775 Versmold (DE)
(74) Vertreter: BSB Intellectual Property Law

(56) Entgegenhaltungen:
- EP-A- 1 197 134
- EP-A- 1 201 112
- DE-A1- 4 120 731
- DE-A1- 4 445 933
- US-A1- 2003 078 085

## Beschreibung

Die Erfindung betrifft eine Vorrichtung zur Erweiterung des Volumens eines Behälters nach dem Oberbegriff des Anspruchs 1.

Die Korntanks von Mähdreschern sind mit Korntankaufsätzen versehen, welche aus mehreren Seitenwänden bestehen. Die Seitenwände sind von geschlossenen Positionen in geöffnete Positionen und umgekehrt bewegbar. Während der Fahrt auf der Straße sind die Seitenwände raumsparend zu einem Deckel geschlossen zusammengeklappt, um eine vorgeschriebene Gesamthöhe des Mähdreschers nicht zu überschreiten. Beim Betrieb auf dem Feld sind die Seitenwände in die geöffnete Position hochgestellt, um das Volumen des Korntanks zu vergrößern, so dass der Korntank in größeren Intervallen entleert werden kann.

Aus der DE 100 51 096 A1 bzw. EP 1 197 134 A1 ist eine Vorrichtung zur Erhöhung des Fassungsvermögen eines Behälters bekannt, die aus vier Wänden besteht, die zwischen einer Betriebsstellung, in der sie eine seitlich geschlossene Verkleidung bilden, und einer Außerbetriebstellung bewegbar sind. Zwei einander gegenüberliegende Wände sind schwenkbar und bestehen aus einem starren Material, die anderen sich gegenüberliegenden schwenkbaren Wände sind aus flexiblem Material hergestellt. Die Wände aus in sich flexiblem Material sind endseitig mit den Wänden aus starrem Material verbunden, so dass in Betriebsstellung eine seitlich geschlossene Verkleidung entsteht. Die starren Wände werden über ein mit einem Antrieb automatisch verstellbares Befüllrohr aufgerichtet und abgesenkt. Die Wände aus flexiblem Material richten sich zusammen mit den starren Wänden in die Betriebsstellung auf und falten sich aufgrund Ihrer Flexibilität wieder zusammen, wenn die Wände aus dem starren Material eingeklappt werden. Die starren Wände werden über die Senkrechte hinaus aufgeklappt, während die flexiblen, trapezförmigen Wände bei vollständig aufgeklappten starren Wänden senkrecht stehen. Nachteilig bei dieser Vorrichtung ist, dass die flexiblen Wände durch den Seitendruck des Korntankinhalts sehr stark belastet werden. Die flexiblen Wände sind für eine derartige Verwendung nicht geeignet und verschleißen daher überdurchschnittlich.

Der vorliegenden Erfindung liegt daher die Aufgabe zugrunde eine Vorrichtung zur Erweiterung des Volumens eines Behälters so zu gestalten, dass die Vorrichtung mehr Volumen bereitstellt und dabei stabil und verschleißfest ist und die Vorrichtung vollautomatisch betätigbar ist.

Diese Aufgabe wird erfindungsgemäß durch die in Patentanspruch 1 genannten Merkmale gelöst. Weitere vorteilhafte Ausführungen des Erfindungsgegenstandes ergeben sich aus den übrigen Ansprüchen.

Indem jedes Aufsatzteil über jeweils wenigstens eine angetriebene Schwenkmechanik aus der flachliegenden Verschlussposition über die Senkrechte hinaus nach Außen in die aufgestellte Befüllposition und umgekehrt bewegbar ist, wird das Fassungsvermögen der Vorrichtung in der Befüllposition vergrößert.

Erfindungsgemäß sind die Stellglieder außerhalb des Behälters angeordnet, damit sie jederzeit leicht zugänglich sind und die Stellglieder nicht mit dem Inhalt des Behälters in Kontakt kommen.

Damit die Vorrichtung einfach und kostengünstig gestaltet ist, besteht der vergrößernde Aufsatz aus wenigstens zwei einander gegenüberliegenden, einteiligen Aufsatzteilen und wenigstens zwei einander gegenüberliegenden, mehrteiligen Aufsatzteilen.

Insbesondere erweist sich eine Konstruktion als vorteilhaft, bei der die mehrteiligen Aufsatzteile aus jeweils zwei Einfaltdreiecken und einem dazwischen angeordneten trapezförmigen Mittelteil gebildet sind, wobei die Einfaltdreiecke über wenigstens ein Scharnier mit dem Mittelteil schwenkbar verbunden sind.

In vorteilhafter Weiterbildung der erfindungsgemäßen Vorrichtung sind die Mittelteile der Aufsatzteile an dem oberen Rand der Öffnung schwenkbar angelenkt, so dass sie im geschlossenen Zustand zusammen mit den einteiligen Aufsatzteilen einen den Korntank verschließenden Deckel bilden.

In weiterer Ausgestaltung der erfindungsgemäßen Vorrichtung sind die Einfaltdreiecke vorteilhafterweise schwenkbar mit den im Winkel zu ihnen stehenden Aufsatzteilen verbunden.

Dadurch, dass die Aufsatzteile eine kinematische Kette bilden, müssen die Aufsatzteile beim Schwenken von der Befüllposition in die Verschlussposition und umgekehrt nicht voneinander getrennt werden.

Um eine einfache, kostengünstige Konstruktion zu erhalten, besteht die Schwenkvorrichtung aus zumindest einer Schwenkmechanik mit wenigstens einer Drehachse, wobei die Schwenkmechanik die jeweils gegenüberliegenden Aufsatzteile gemeinsam verschwenkt.

Damit die Aufsatzteile bis zu einem stumpfen Öffnungswinkel verschwenkbar sind, ist an der Drehachse zumindest ein Aufstellhebel angeordnet, der über wenigstens eine Pendelstütze mit dem Aufsatzteil verbunden ist.

Wenn die Drehachsen der Schwenkmechaniken über wenigstens eine Koppelstange miteinander verbunden sind, führen die gegenüberliegenden Aufsatzteile gemeinsam gleiche oder entgegengesetzte Schwenkbewegungen aus.

In weiterer Ausgestaltung des vorgenannten Ausführungsbeispiels werden die über die Koppelstange miteinander verbundenen Drehachsen zusammen über wenigstens ein Stellglied angetrieben.

Besonders wirtschaftlich ist eine Lösung bei der die Stellglieder doppeltwirkende Hydraulikzylinder gleichen Typs sind, da die Hydraulikzylinder mit steigender Stückzahl günstiger erwerbbar sind und die Ersatzteilbevorratung reduzierter ist.

Die doppeltwirkenden Hydraulikzylinder werden vorteilhafterweise mit dem gleichen Druck beaufschlagt, so dass nur ein einfacher Hydraulikantrieb ohne zusätzliche Regelung benötigt wird.

Dadurch, dass die Kolbenstangen der Hydraulikzylinder beim Schwenken der Aufsatzteile entgegengesetzte Bewegungsrichtungen aufweisen, drücken die Kolbenstangen bei gleichem Druck mit unterschiedlich großen Kräften.

Damit die Aufstellteile möglichst ruckfrei verschwenkt werden, bewegen sich die Kolbenstangen gleichzeitig und mit annähernd gleicher Geschwindigkeit.

Damit die Vorrichtung beim Schwenken nicht blockiert, werden wenigstens zwei Aufsatzteile mit einer ersten Schwenkmechanik annähern senkrecht aufgestellt, wobei wenigstens zwei weitere Aufsatzteile mitaufgestellt werden und das anschließend und /oder gleichzeitig die zwei weiteren Aufsatzteile von einer zweiten Schwenkmechanik über die Senkrechte hinaus bis zu einem zweiten Öffnungswinkel geöffnet werden, wobei die ersten Aufstellteile über die Senkrechte hinaus bis zu einem ersten Öffnungswinkel mitaufgestellt werden.

Weitere vorteilhafte Ausführungen sind Gegenstand weiterer Unteransprüche und werden nachfolgend an Hand eines in mehreren Figuren dargestellten Ausführungsbeispiels beschrieben.

Es zeigt:
- Fig.1: einen Mähdrescher mit einer erfindungsgemäßen Vorrichtung zur Vergrößerung des Volumens eines Behälters,
- Fig.2: eine perspektivische Ansicht der erfindungsgemäßen Vorrichtung auf einem Behälter, aufgestellt zu einem trichterförmigen Aufsatz,
- Fig.3: eine perspektivische Ansicht der an dem Behälter angeordneten Schwenkvorrichtung

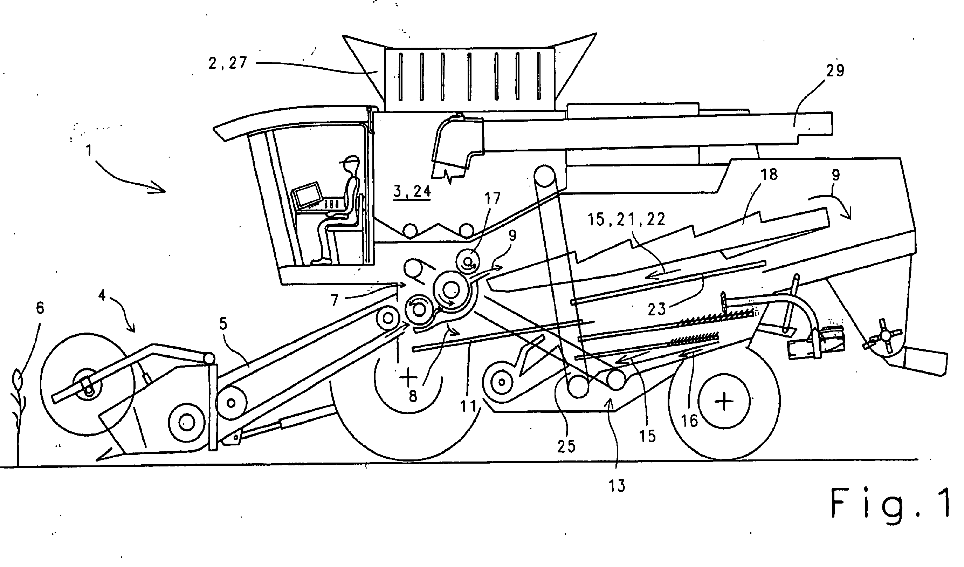

In Fig.1 ist ein schematischer Längsschnitt durch einen Mähdrescher 1 mit einer erfindungsgemäßen Vorrichtung 2 zur Vergrößerung des Volumens eines Korntanks 3 dargestellt. Der Mähdrescher 1 ist frontseitig mit einem Schneidwerk 4 ausgestattet, das an einem Schrägförderer 5 angeordnet ist. Mit dem Schneidwerk 4 nimmt der Mähdrescher 1 das Erntegut 6 auf und führt es dem Schrägförderer 5 zu. Der Schrägförderer 5 übergibt das Erntegut 6 an ein nachgeschaltetes Dreschwerk 7. Das Dreschwerk 7 bereitet das Erntegut 6 auf, wobei es in ein Korn-Spreu-Gemisch 8 und einen aus ausgedroschenen Halmen bestehenden Gutstrom 9 geteilt wird. Das Korn-Spreu-Gemisch 8 wird über einen Vorbereitungsboden 11 direkt zu einer Reinigungseinrichtung 13 gefördert, die die Körner 15 von den Nichtkornbestandteilen 16, d. h. von Halm- und Spreuteilen trennt.

Hinter dem Dreschwerk 7 ist eine entgegen dem Uhrzeigersinn rotierende Wendetrommel 17 angeordnet, die den aus ausgedroschenen Halmen bestehenden Gutstrom 9 auf einen Hordenschüttler 18 fördert. Der Hordenschüttler 18 trennt noch im Gutstrom 9 vorhandene Körner 15, Kurzstroh 21 und Spreu 22, die über einen Rücklaufboden 23 ebenfalls in die Reinigungseinrichtung 13 gelangen. Die von der Reinigungseinrichtung 13 abgetrennten Körner 15 fördert ein Kornelevator 25 in einen Behälter 24 am Mähdrescher 1, den sogenannten Korntank 3. Bei Bedarf werden die Körner 15 mit einem Korntankentleerförderer 29 aus dem Korntank 3 auf einen Transportwagen (nicht dargestellt) umgeladen. Auf der Oberseite des Korntanks 3 ist die erfindungsgemäße Vorrichtung 2 zur Erhöhung des Volumens eines Korntanks 3 in Form eines Komtankaufsatzes 27 angeordnet. Der Korntankaufsatz 27 ist zu einem das Volumen des Korntanks 3 vergrößernden, trichterförmigen Aufsatz 27 aufgestellt.

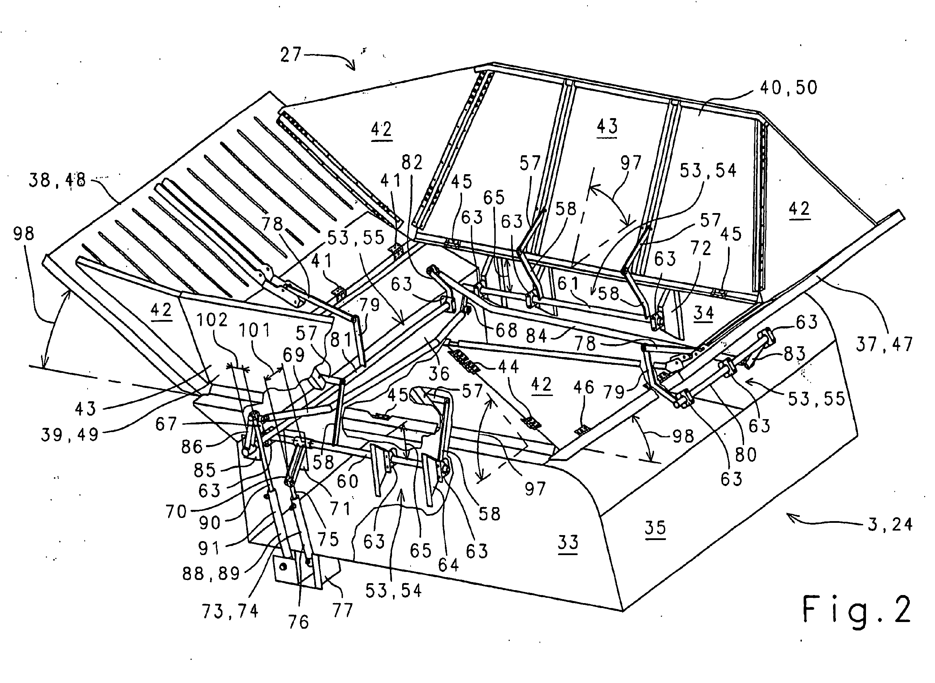

Fig. 2 zeigt die perspektivische Ansicht der erfindungsgemäßen Vorrichtung 2 zur Erweiterung des Volumens eines Behälters 24. Die Vorrichtung 2 ist auf einem Rand einer oberen Öffnung 32 des oben offenen rechteckigen Behälters 24 angeordnet, wobei der Rand des Behälters 24 von den Oberkanten der zwei Seitenwände 33, 34 und den Oberkanten der zwei Stirnwände 35, 36 des Behälters 24 gebildet wird. Die Vorrichtung 2 besteht aus zwei gegenüberliegenden einteiligen Aufsatzteilen 37, 38 und zwei gegenüberliegenden mehrteiligen Aufsatzteilen 39, 40. Die beiden einteiligen Aufsatzteile 37, 38 sind jeweils mittels an sich bekannter und daher hier nicht näher erläuterter Scharniere 41 an den entsprechenden Oberkanten der Stirnwände 35, 36 schwenkbar angeschlagen. Die zwei gegenüberliegenden mehrteiligen Aufsatzteile 39, 40 bestehen je aus zwei gleichschenkligen Einfaltdreiecken 42 und einem dazwischen angeordneten, trapezförmigen Mittelteil 43, wobei die Einfaltdreiecke 42 über Scharniere 44 schwenkbar mit dem Mittelteil 43 verbunden sind. Die Mittelteile 43 sind über Scharniere 45 an der Oberkante der Seitenwände 33, 34 angeschlagen. Die äußeren Kanten der Einfaltdreiecke 42 sind ebenfalls über Scharniere 46 mit den im Winkel dazu stehenden einteiligen Aufsatzteilen 37, 38 gelenkig verbunden. Die Aufsatzteile 37, 38, 39, 40 sind in Befüllpositionen 47, 48, 49, 50 aufgestellt und bilden zusammen den trichterförmigen Aufsatz 27. Die als Scharniere 41, 44, 45, 46 ausgeführten gelenkigen Verbindungen zwischen den einteiligen Aufsatzteilen 37, 38 und den mehrteiligen Aufsatzteilen 39, 40 sowie zwischen den Mittelteilen 43 und den Einfaltdreiecken 42 der mehrteiligen Aufsatzteile 39, 40 machen aus der Vorrichtung 2 eine kinematische Kette 52, die mit Hilfe einer noch näher zu beschreibenden Schwenkvorrichtung 53 faltbar ist. Mit der Schwenkvorrichtung 54 sind die Aufsatzteile 37, 38, 39, 40 gemeinsam aus horizontalen Verschlusspositionen, in denen sie einen die Öffnung 32 des Behälters 24 verschließenden Deckel bilden über die Senkrechte hinaus nach Außen in die Befüllpositionen 47, 48, 49, 50 und umgekehrt verschwenkbar.

Die erfindungsgemäße Schwenkvorrichtung 53 besteht aus zwei nachfolgend noch näher erläuterten Schwenkmechaniken 54, 55 wobei die erste Schwenkmechanik 54 den zwei gegenüberliegenden, mehrteiligen Aufsatzteilen 39, 40 und die zweite Schwenkmechanik 55 den gegenüberliegenden, einteiligen Aufsatzteilen 37, 38 zugeordnet ist. Die erste Schwenkmechanik 54 für die gegenüberliegenden mehrteiligen Aufsatzteile 39, 40 besteht aus den nachfolgend beschrieben Elementen.

An die Mittelteile 43 der beiden mehrteiligen Aufsatzteile 39, 40 sind jeweils zwei Pendelstützen 57 angelenkt, die am anderen Ende gelenkig mit je zwei Aufstellhebeln 58 verbunden sind. Die Aufstellhebel 58 sind auf parallel zu den Oberkanten der Seitenwände 33, 34 verlaufenden Achsen 60, 61 aufgeschweißt, die auf der Innenseite der Seitenwände 33, 34 in Stehlagern 63 drehbar gelagert sind. Die Stehlager 63 sind über Konsolen 64 an den Seitenwänden 33, 34 befestigt. Die Achsen 60, 61 liegen in einem Abstand 65 von den Oberkanten der Seitenwände 33, 34 entfernt. An den gegenüberliegenden Enden der Achsen 60, 61 ist je ein Kipphebel 67, 68 angeschweißt. Die Achsen 60, 61 sind über eine Koppelstange 69 miteinander gekoppelt, die gelenkig mit den Kipphebeln 67, 68 verbunden ist. Auf der Achse 60 ist ein Hebel 70 angeschweißt, der durch einen Ausschnitt 71 in der Seitenwand 33 aus dem Behälter 24 ragt. Das aus dem Behälter 24 ragende Ende des Hebels 70 ist mit einem als doppelt wirkender Hydraulikzylinder 73 ausgeführten ersten Stellglied 74 gelenkig verbunden. Die Kolbenstange 75 des Hydraulikzylinders 73 ist gelenkig mit dem Hebel 70 und das Zylinderrohr 76 des Hydraulikzylinders 73 ist über eine Konsole 77 gelenkig an der Außenseite der Behälters 24 befestigt.

Die zweite Schwenkmechanik 55 für die gegenüberliegenden einteiligen Aufsatzteile 37, 38 ist vergleichbar ausgeführt und besteht aus nachfolgend beschriebenen Elementen.

An den beiden einteiligen Aufsatzteile 37, 38 greift jeweils eine Pendelstütze 78 an, die am anderen Ende gelenkig mit einem Aufstellhebel 79 verbunden ist. Die Aufstellhebel 79 sind auf parallel zu den Oberkanten der Seitenwände 35, 36 verlaufenden Achsen 80, 81 aufgeschweißt, die auf der Innenseite der Seitenwände 35, 36 in Stehlagern 63 drehbar gelagert angeordnet sind. Die Stehlager 63 sind an den Seitenwänden 35, 36 befestigt, wobei die Achsen 80, 81 auf gleicher Höhe wie die der den mehrteiligen Aufsatzteilen 39, 40 zugeordneten Achsen 60, 61 liegen. An den gegenüberliegenden Enden der Achsen 80, 81 ist je ein Kipphebel 82, 83 angeschweißt. Die Achsen 80, 81 sind über eine Koppelstange 84 miteinander gekoppelt, die gelenkig mit den Kipphebeln 82, 83 verbunden ist. Auf dem durch einen Ausschnitt 85 in der Seitenwand 33 ragenden Ende der Drehachse 81 ist ein Hebel 86 aufgeschweißt, der mit einem ebenfalls als doppelt wirkenden Hydraulikzylinder 88 ausgeführten zweiten Stellglied 89 gelenkig verbunden ist. Die Kolbenstange 90 des Hydraulikzylinders 88 ist gelenkig mit dem Hebel 86 und das Zylinderrohr 91 des Hydraulikzylinders 88 ist über die Konsole 77 gelenkig an der Außenseite der Behälters 24 befestigt.

Um die Aufsatzteile 37, 38, 39, 40 aus den horizontalen Verschlusspositionen nach Außen aufzurichten, wird das ihnen zugeordnete als doppelt wirkender Hubzylinder 88 ausgeführte Stellglied 89 kolbenseitig druckbeaufschlagt. Dabei fährt die Kolbenstange 90 des Stellgliedes 89 aus, wobei sich die dem einteiligen Aufsatzteil 38 zugeordnete Drehachse 81 in Richtung der Stirnwand 36 dreht, an dem das Aufsatzteil 38 schwenkbar angeschlagen ist. Dadurch bedingt, bewegt sich die zwischen den Drehachse 80, 81 fixierte Koppelstange 84 in Richtung Stirnwand 35 und bewirkt eine Drehung der dem einteiligen Aufsatzteil 37 zugeordneten Drehachse 80 in Richtung Stirnwand 35, an der das einteilige Aufsatzteil 37 schwenkbar angeschlagen ist. Die an den Drehachsen 80, 81 befestigten Aufstellhebel 79 schwenken nach oben und richten die Aufsatzteile 37, 38 mit Hilfe der sich aufstellenden Pendelstützen 78 annähernd senkrecht auf. Dabei werden die mit den einteiligen Aufsatzteilen 37, 38 gelenkig verbundenen Einfaltdreiecke 42 aufgerichtet, wodurch die Mittelteile 43 der Aufsatzteile 39, 40 mitaufgestellt werden. Gleichzeitig mit der Druckbeaufschlagung des Hubzylinders 88 wird das als doppelt wirkender Hubzylinder 73 ausgeführte Stellglied 54 kolbenstangenseitig druckbeaufschlagt, wobei dessen Kolbenstange 75 in das Zylinderrohr 76 hinein bewegt wird und sich die dem Aufsatzteil 39 zugeordnete Drehachse 60 in Richtung der Seitenwand 33 dreht. Dadurch bewegt sich die zwischen den Drehachse 60, 61 fixierte Koppelstange 81 in Richtung Seitenwand 34 und bewirkt eine Drehung der Drehachse 61 in Richtung Seitenwand 34, an der das Aufsatzteil 40 schwenkbar angeschlagen ist. Die an den Drehachsen 60, 61 befestigten Aufstellhebel 58 schwenken nach oben und richten die Aufsatzteile 39, 40 über die Senkrechte hinaus bis zu einem zweiten Öffnungswinkel 97 in die Befüllpositionen 49, 50 auf. Dabei werden die einteiligen Aufsatzteile 37, 38 mit Hilfe der Einfaltdreiecke 42 über die annähernd Senkrechte hinaus bis zu einem ersten Öffnungswinkel 98 in die Befüllpositionen 47, 48 aufgestellt.

Um die Aufsatzteile 37, 38, 39, 40 umgekehrt von den Befüllpositionen zurück in die horizontalen Verschlusspositionen zu verschwenken, wird der Hydraulikzylinder 73 kolbenseitig druckbeaufschlagt, so dass die eingefahrene Kolbenstange 75 aus dem Zylinderrohr 76 des Hydraulikzylinders 73 herausbewegt wird und der Hubzylinder 88 kolbenstangenseitig druckbeaufschlagt, damit die ausgefahrene Kolbenstange 90 des Hydraulikzylinders 88 gleichzeitig in das Zylinderrohr 91 zurückbewegt wird.

Damit die beiden Hydraulikzylinder 73, 88 baugleich ausgeführt werden können, sind die Hebel 70, 86 gleichlang und die Öffnungswinkel 97, 98 gleich groß gewählt. Beide Hydraulikzylinder 73, 88 werden mit dem gleichen Druck beaufschlagt. Diese Bauweise bedingt, dass die ausfahrende Kolbenstange 75, 90 mit einer größeren Kraft als die einfahrende Kolbenstange 75, 90 drückt. Der zurückgelegte Hub der beiden Kolbenstangen 75, 90 ist annähernd gleich, so dass beide Kolbenstangen 75, 90 mit annähern gleicher Geschwindigkeit ein- und ausfahren.

Da der Aufsatz 27 eine kinematisch zusammenhängende Kette bildet, muss die Bewegung der Schwenkmechaniken 54, 55 gesteuert werden, damit die Aufsatzteile 37, 38, 39, 40 sich beim Schwenken nicht gegenseitig behindern sondern unterstützen.

Die unterschiedlichen Kolbenkräfte der Hydraulikzylinder 73, 88 beim Ein- und Ausfahren der Kolbenstangen 75, 90 sowie die beim Schwenken sich stetig ändernden Abstände 101, 102 zwischen Kolbenstange 75, 90 und Drehachse 60, 81 bestimmen die für das Schwenken der Aufsatzteile 37, 38, 39, 40 aufzubringenden, an den Achsen 60, 61, 80, 81 der Schwenkmechaniken 54, 55 angreifenden Drehmomente.

Beim Schwenken der mehrteiligen Aufsatzteile 39, 40 aus den nach Außen geneigten Befüllpositionen 49, 50 in die horizontalen Verschlusspositionen werden zu Anfang hohe Drehmomente an den Achsen 60, 61 der Schwenkmechanik 54 zum Einklappen der Aufsatzteile 39, 40 benötigt, um die auf die schräg nach Außen stehenden Aufsatzteile 39, 40 wirkende Schwerkraft zu überwinden. Die ausfahrende Kolbenstange 75 drückt mit hoher Kraft und hat einen maximalen lotrechten Abstand 101 zur Drehachse 60, so dass ein maximales Drehmoment auf die Schwenkvorrichtung 54 wirkt. Gleichzeitig werden die Aufsatzteile 37, 38 über die einfahrende Kolbenstange 88, die nur einen minimalen Abstand 102 zur Drehachse 81 hat, mit einem minimalen, auf die Schwenkvorrichtung 55 wirkenden, Drehmoment verschwenkt. Während des Verschwenkens verkleinert sich der eine Abstand 101 während der andere Abstand 102 zunimmt, wodurch sich das über die Schwenkmechaniken 54 der mehrteiligen Aufsatzteile 39, 40 wirkende Drehmoment verkleinert und gleichzeitig das auf die Schwenkmechanik 55 der einteiligen Aufsatzteile 37, 38 wirkende Drehmoment vergrößert.

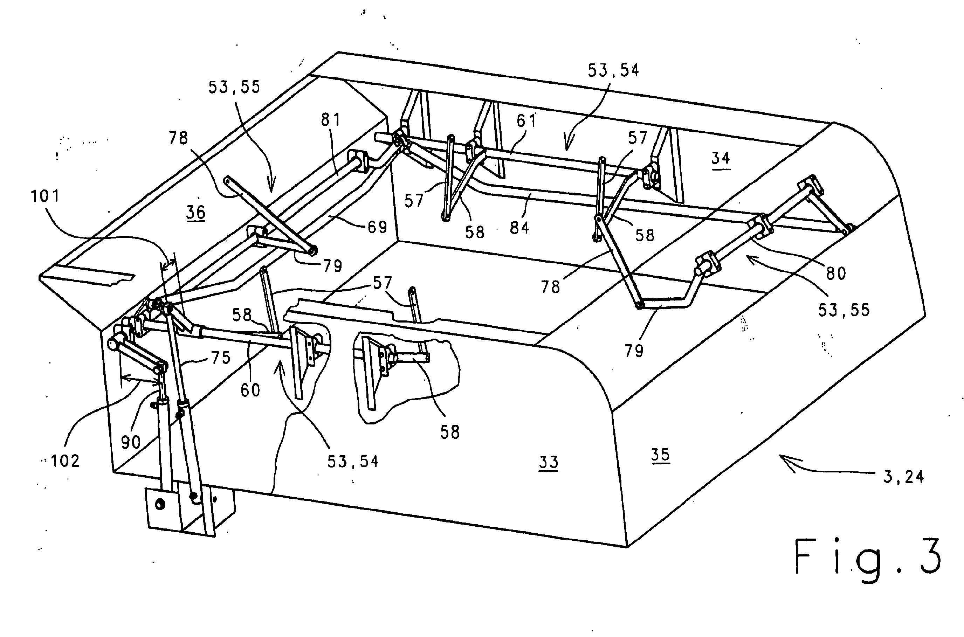

Fig. 3 zeigt die perspektivische Ansicht der erfindungsgemäßen Schwenkvorrichtung 53 in einer Position bei denen die Aufsatzteile 37, 38, 39, 40 (nicht dargestellt) in den horizontalen Verschlusspositionen verschwenkt sind. Zum Schwenken der Aufsatzteile 37, 38 aus den horizontalen Verschlusspositionen in die Befüllpositionen 47, 48 werden zu Anfang hohe Drehmomente an den Achsen 80, 81 zum Aufstellen der Aufsatzteile 37, 38 benötigt, um die auf die Aufsatzteile 37, 38 wirkende Schwerkraft zu überwinden. Die ausfahrende Kolbenstange 90 drückt mit hoher Kraft und hat einen maximalen lotrechten Abstand 101 zur Drehachse 69, so dass ein maximales Drehmoment auf die Schwenkvorrichtung 55 wirkt. Gleichzeitig werden die Aufsatzteile 39, 40 über die einfahrende Kolbenstange 90, die mit geringer Kraft drückt und einen minimalen lotrechten Abstand 102 zur Drehachse 60 hat, mit einem auf die Schwenkvorrichtung 54 wirkenden minimalen Drehmoment verschwenkt. Mit fortschreitendem Verschwenken der Aufsatzteile 39, 40 verkleinert sich der Abstand 101 zwischen der Drehachse 60 und dem Hydraulikzylinder 73 und gleichzeitig vergrößert sich der Abstand 102 zwischen der Drehachse 81 und dem Hydraulikzylinder 88, wodurch sich das über die Schwenkmechanik 54 der mehrteiligen Aufsatzteile 39, 40 wirkende minimale Drehmoment vergrößert und gleichzeitig das auf die Schwenkmechanik 55 der einteiligen Aufsatzteile 37, 38 wirkende maximale Drehmoment verkleinert.

Als weitere Ausführungsform der erfindungsgemäßen Vorrichtung ist beispielsweise denkbar anstelle der Hydraulikzylinder 73, 88 elektrische Spindelgetriebe als Stellglieder einzusetzen.

Bei einer weiteren Ausführungsform der erfindungsgemäßen Vorrichtung können auf die Enden der Achsen 60, 61, 80, 81 Getriebemotoren als Stellglieder aufgesetzt sein.

**Bezugszeichenliste:**

| | | | |
|---|---|---|---|
| 1 | Mähdrescher | 40 | Aufsatzteil |
| 2 | Vorrichtung | 41 | Scharnier |
| 3 | Korntank | 42 | Einfaltdreiecke |
| 4 | Schneidwerk | 43 | Mittelteil |
| 5 | Schrägförderer | 44 | Scharnier |
| 6 | Erntegut | 45 | Scharnier |
| 7 | Dreschwerk | 46 | Scharnier |
| 8 | Korn-Spreu-Gemisch | 47 | Befüllposition |
| 9 | Gutstrom | 48 | Befüllposition |
| 11 | Vorbereitungsboden | 49 | Befüllposition |
| 13 | Reinigungseinrichtung | 50 | Befüllposition |
| 15 | Körner | | |
| 16 | Nichtkombestandteil | 54 | Schwenkmechanik |
| 17 | Wendetrommel | 55 | Schwenkmechanik |
| 18 | Hordenschüttler | 57 | Pendelstütze |
| 21 | Kurzstroh | 58 | Aufstellhebel |
| 22 | Spreu | 60 | Achsen |
| 23 | Rücklaufboden | 61 | Achsen |
| 24 | Behälter | 63 | Stehlager |
| 25 | Kornelevator | 64 | Konsole |
| 27 | Aufsatz | 65 | Abstand |
| 29 | Korntankentleerförderer | 67 | Kipphebel |
| | | 68 | Kipphebel |
| | | 69 | Koppelstange |
| 33 | Seitenwand | 70 | Hebel |
| 34 | Seitenwand | 71 | Ausschnitt |
| 35 | Stirnwand | 73 | Hydraulikzylinder |
| 36 | Stirnwand | 74 | Stellglied |
| 37 | Aufsatzteil | 75 | Kolbenstange |
| 38 | Aufsatzteil | 76 | Zylinderrohr |
| 39 | Aufsatzteil | 78 | Pendelstütze |
| 79 | Aufstellhebel | | |
| 80 | Achse | | |
| 81 | Achse | | |
| 82 | Kipphebel | | |
| 83 | Kipphebel | | |
| 84 | Koppelstange | | |
| 85 | Ausschnitt | | |
| 86 | Hebel | | |
| 88 | Hydraulikzylinder | | |
| 89 | Stellglied | | |
| 90 | Kolbenstange | | |
| 91 | Zylinderrohr | | |
| 97 | Öffnungswinkel | | |
| 98 | Öffnungswinkel | | |
| 101 | Abstand | | |
| 102 | Abstand | | |

## Patentansprüche

1. Vorrichtung zur Erweiterung des Volumens eines Behälters (24) mit einer, oberen, Öffnung, mit am oberen Rand der Öffnung schwenkbar angeschlagenen Aufsatzteilen (37, 38, 39, 40) die in flachliegenden Verschlusspositionen einen die Öffnung zumindest teilweise verschließenden Deckel bilden und in aufgestellten Befüllpositionen (47, 48, 49, 50) einen vergrößernden Aufsatz (27) bilden, wobei die benachbarten Aufsatzteile (37, 38, 39, 40) schwenkbar miteinander verbunden sind,
**dadurch gekennzeichnet,**
**dass** jedes Aufsatzteil (37, 38, 39, 40) über wenigstens eine angetriebene Schwenkvorrichtung (53) mit Stellgliedern (74, 89) aus der flachliegenden Verschlussposition über die Senkrechte hinaus nach Außen in die aufgestellte Befüllposition (47, 48, 49, 50) und umgekehrt bewegbar ist, wobei die Stellglieder (74, 89) außerhalb des Behälters (24) angeordnet sind.

2. Vorrichtung zur Erweiterung des Volumens eines Behälters nach Anspruch 1,
**dadurch gekennzeichnet,**
**dass** der vergrößernde Aufsatz (27) aus wenigstens zwei einander gegenüberliegenden, einteiligen Aufsatzteilen (37, 38) und wenigstens zwei einander gegenüberliegenden, mehrteiligen Aufsatzteilen (39, 40) besteht.

3. Vorrichtung zur Erweiterung des Volumens eines Behälters nach wenigstens einem der vorhergehenden Ansprüche,
**dadurch gekennzeichnet,**
**dass** die mehrteiligen Aufsatzteile (39, 40) aus jeweils zwei Einfaltdreiecken (42) und einem dazwischen angeordneten trapezförmigen Mittelteil (43) gebildet sind, wobei die Einfaltdreiecke (42) über wenigstens ein Scharnier (44) mit dem Mittelteil (43) schwenkbar verbunden sind.

4. Vorrichtung zur Erweiterung des Volumens eines Behälters nach Anspruch 3,
**dadurch gekennzeichnet,**
**dass** die Mittelteile (43) der Aufsatzteile (39, 40) am oberen Rand der Öffnung schwenkbar angelenkt sind.

5. Vorrichtung zur Erweiterung des Volumens eines Behälters nach Anspruch 3,
**dadurch gekennzeichnet,**
**dass** die Einfaltdreiecke (42) schwenkbar mit den im Winkel zu ihnen stehenden Aufsatzteilen (37, 38) verbunden sind.

6. Vorrichtung zur Erweiterung des Volumens eines Behälters nach Anspruch 1,
**dadurch gekennzeichnet,**
**dass** die Aufsatzteile (37, 38, 39, 40) eine kinematische Kette (52) bilden.

7. Vorrichtung zur Erweiterung des Volumens eines Behälters nach wenigstens einem der vorhergehenden Ansprüche,
**dadurch gekennzeichnet,**
**dass** die Schwenkvorrichtung (53) aus zumindest einer Schwenkmechanik (54, 55) mit wenigstens einer Drehachse (60, 61, 80,81) besteht, wobei die Schwenkmechanik (54, 55) die jeweils gegenüberliegenden Aufsatzteile (37, 38, 39, 40) gemeinsam verschwenkt.

8. Vorrichtung zur Erweiterung des Volumens eines Behälters nach Anspruch 7,
**dadurch gekennzeichnet,**
**dass** an der Drehachse (60, 61, 80, 81) zumindest ein Aufstellhebel (58, 79) angeordnet ist, der über wenigstens eine Pendelstütze (57, 78) mit dem Aufsatzteil (37, 38, 39, 40) verbunden ist.

9. Vorrichtung zur Erweiterung des Volumens eines Behälters nach zumindest einem der Ansprüche 7 oder 8,
**dadurch gekennzeichnet,**
**dass** die Drehachsen (60, 61, 80, 81) der Schwenkmechaniken (54, 55) über wenigstens eine Koppelstange (89, 99) miteinander verbunden sind.

10. Vorrichtung zur Erweiterung des Volumens eines Behälters nach zumindest einem der Ansprüche 7 oder 9,
**dadurch gekennzeichnet,**
**dass** die über wenigstens eine Koppelstange (69, 84) miteinander verbundenen Drehachsen (60, 61, 80, 81) zusammen über das wenigstens ein Stellglied (74, 89) angetrieben werden.

11. Vorrichtung zur Erweiterung des Volumens eines Behälters nach einem der vorhergehenden Ansprüche,
**dadurch gekennzeichnet,**
**dass** die Stellglieder (74, 89) doppeltwirkende Hydraulikzylinder (73, 88) sind.

12. Vorrichtung zur Erweiterung des Volumens eines Behälters nach Anspruch 11,
**dadurch gekennzeichnet,**
**dass** die Hydraulikzylinder (73, 88) mit dem gleichen Druck beaufschlagt werden.

13. Vorrichtung zur Erweiterung des Volumens eines Behälters nach wenigstens einem der Ansprüche 11 oder 12,
**dadurch gekennzeichnet,**
**dass** die Kolbenstangen (75, 90) der Hydraulikzylinder (73, 88) beim Schwenken der Aufsatzteile (37, 38, 39, 40) entgegengesetzte Bewegungsrichtungen aufweisen.

14. Vorrichtung zur Erweiterung des Volumens eines Behälters nach wenigstens einem der Ansprüche 11 bis 13,
**dadurch gekennzeichnet,**
**dass** die Kolbenstangen (75, 90) sich gleichzeitig und mit annähernd gleicher Geschwindigkeit bewegen.

15. Vorrichtung zur Erweiterung des Volumens eines Behälters (24) nach einem der vorhergehenden Ansprüche,
**dadurch gekennzeichnet,**
**dass** wenigstens zwei Aufsatzteile (37, 38) mit einer ersten Schwenkmechanik (55) annähernd senkrecht aufgestellt werden, wobei wenigstens zwei weitere Aufsatzteile (39, 40) mitaufgestellt werden und dass anschließend und /oder gleichzeitig die zwei weiteren Aufsatzteile (39, 40) von einer zweiten Schwenkmechanik (54) über die Senkrechte hinaus bis zu einem zweiten Öffnungswinkel (97) geöffnet werden, wobei die ersten Aufsatzteile (37,38) über die Senkrechte hinaus bis zu einem ersten Öffnungswinkel (98) mitaufgestellt werden.

## Claims

1. Apparatus for expanding the volume of a container (24) having a top opening, with attachment panels (37, 38, 39, 40) pivotally hinged to the top edge of the opening which when lying flat in the closed position form a cover which closes the opening at least partially and when in the erected filling position (47, 48, 49, 50) form an expansion attachment (27) wherein adjacent attachment panels (37, 38, 39, 40) are pivotally linked with one another, **characterized in that** by means of at least one driven swivelling device (53) having actuators (74, 89) each of the attachment panels (37, 38, 39, 40) can be moved from lying flat in the closed position passing through the vertical and outwardly to the erected filling position (47, 48, 49, 50) and in reverse, wherein the actuators (74, 89) are disposed external of the container (24).

2. The apparatus for expanding the volume of a container according to claim 1, **characterized in that** the expansion attachment (27) consists of at least two one-piece attachment panels (37, 38) opposite one another and at least two multipart attachment panels (39, 40) opposite one another.

3. The apparatus for expanding the volume of a container according to at least one of the preceding claims, **characterized in that** each of the multipart attachment panels (39, 40) is formed of a pair of infolding triangles (42) and a trapezoidal centre part (43) disposed in-between, the infolding triangles (42) being pivotally linked to the centre part (43) by way of at least one hinge (44).

4. The apparatus for expanding the volume of a container according to claim 3, **characterized in that** the centre parts (43) of the attachment panels (37, 40) are pivotally linked to the top edge of the opening.

5. The apparatus for expanding the volume of a container according to claim 3, **characterized in that** the infolding triangles (42) are disposed at an angle, and pivotally linked, to the attachment panels (37, 38).

6. The apparatus for expanding the volume of a container according to claim 1, **characterized in that** the attachment panels (37, 38, 39, 40) establish a kinematic chain (52).

7. The apparatus for expanding the volume of a container according to at least one of the preceding claims, **characterized in that** the swivelling device (53) consists of at least one swivelling mechanism (54, 55) having at least one pivot hinge (60, 61, 80, 81), wherein the swivelling mechanism (54, 55) causes the attachment panels (37, 38, 39, 40) opposite one another to swivel jointly.

8. The apparatus for expanding the volume of a container according to claim 7, **characterized in that** the pivot hinge (60, 61, 80, 81) is provided with at least one erecting lever (58, 79) which is linked to the attachment panel (37, 38, 39, 40) via at least one hinged column (57, 78).

9. The apparatus for expanding the volume of a container according to at least one of the claims 7 or 8, **characterized in that** the pivot hinges (60, 61, 80, 81) of the swivelling mechanisms (54, 55) are linked to one another via at least one coupling rod (89, 99).

10. The apparatus for expanding the volume of a container according to at least one of the claims 7 or 9, **characterized in that** the pivot hinges (60, 61, 80, 81) interlinked by way of at least one coupling rod (69, 84) are driven jointly through the at least one actuator (74, 89).

11. The apparatus for expanding the volume of a container according to any of the preceding claims, **characterized in that** the actuators (74, 89) are dual-acting hydraulic cylinders (73, 88).

12. The apparatus for expanding the volume of a container according to claim 11, **characterized in that** the hydraulic cylinders (73, 88) are subjected to the same pressure.

13. The apparatus for expanding the volume of a container according to at least one of the claims 11 or 12, **characterized in that** the piston rods (75, 90) of the hydraulic cylinders (73, 88) show opposite directions of movement when the attachment panels (37, 38, 39, 40) pivot.

14. The apparatus for expanding the volume of a container according to at least one of the claims 11 to 13, **characterized in that** the piston rods (75, 90) move simultaneously and at approximately the same speed.

15. The apparatus for expanding the volume of a container (24) according to any of the preceding claims, **characterized in that** at least two attachment panels (37, 38) are erected approximately perpendicularly by means of a first swivelling mechanism (55), wherein at least two further attachment panels (39, 40) are erected along with these, and that subsequently and/or simultaneously the two further attachment panels (39, 40) are opened up by a second swivelling mechanism (54) passing over the vertical until reaching a second opening angle (97) wherein the first attachment panels (37, 38) are erected along passing over the vertical until reaching a first opening angle (98).

## Revendications

1. Dispositif d'agrandissement du volume d'un conteneur (24) comprenant une ouverture supérieure, des parties rapportées (37, 38, 39, 40) montées à pivotement sur le bord supérieur de l'ouverture qui, dans des positions de fermeture à plat, forment un couvercle fermant au moins en partie ladite ouverture et, dans des positions de remplissage (47, 48, 49, 50) redressées, forment un ensemble rapporté (27) agrandissant, les parties rapportées (37, 38, 39, 40) voisines étant reliées à pivotement entre elles,
**caractérisé par le fait que** chaque partie rapportée (37, 38, 39, 40) est déplaçable par au moins un dispositif de pivotement (53) entraîné, à vérins (74, 89), depuis la position de fermeture à plat, au-delà de la verticale, vers l'extérieur dans la position de remplissage (47, 48, 49, 50) redressée et vice versa, les vérins (74, 89) étant disposés à l'extérieur du conteneur (24).

2. Dispositif d'agrandissement du volume d'un conteneur selon la revendication 1, **caractérisé par le fait que** ledit ensemble rapporté (27) agrandissant se compose d'au moins deux parties rapportées (37, 38) opposées en une pièce et d'au moins deux parties rapportées (39, 40) opposées en plusieurs pièces.

3. Dispositif d'agrandissement du volume d'un conteneur selon l'une au moins des revendications précédentes, **caractérisé par le fait que** les parties rapportées (39, 40) en plusieurs pièces sont formées chacune de deux triangles à replier (42) et d'une partie centrale (43) trapézoïdale disposée entre ceux-ci, lesdits triangles à replier (42) étant reliés à pivotement à ladite partie centrale (43) par le biais d'au moins une charnière (44).

4. Dispositif d'agrandissement du volume d'un conteneur selon la revendication 3, **caractérisé par le fait que** les parties centrales (43) des parties rapportées (37, 38) sont articulées à pivotement sur le bord supérieur de l'ouverture.

5. Dispositif d'agrandissement du volume d'un conteneur selon la revendication 3, **caractérisé par le fait que** les triangles à replier (62) sont reliés à pivotement aux parties rapportées (37, 38) placées à un angle par rapport à eux.

6. Dispositif d'agrandissement du volume d'un conteneur selon la revendication 1, **caractérisé par le fait que** les parties rapportées (37, 38, 39, 40) forment une chaîne cinématique (52).

7. Dispositif d'agrandissement du volume d'un conteneur selon l'une au moins des revendications précédentes, **caractérisé par le fait que** le dispositif de pivotement (53) se compose d'au moins une mécanique de pivotement (54, 55) ayant au moins un axe de rotation (60, 61, 80, 81), ladite mécanique de pivotement (54, 55) faisant pivoter en commun les parties rapportées (37, 38, 39, 40) respectivement opposées.

8. Dispositif d'agrandissement du volume d'un conteneur selon la revendication 7, **caractérisé par le fait que** sur ledit axe de rotation (60, 61, 80, 81) est disposé au moins un levier de redressement (58, 79) qui est relié à la partie rapportée (37, 38, 39, 40) par au moins un appui pendulaire (57, 78)

9. Dispositif d'agrandissement du volume d'un conteneur selon l'une au moins des revendications 7 ou 8, **caractérisé par le fait que** les axes de rotation (60, 61, 80, 81) des mécaniques de pivotement (54, 55) sont reliés entre eux par au moins une tige d'accouplement (89, 99).

10. Dispositif d'agrandissement du volume d'un conteneur selon l'une au moins des revendications 7 ou 9, **caractérisé par le fait que** les axes de rotation (60, 61, 80, 81) reliés entre eux par au moins une tige d'accouplement (69, 84) sont entraînés ensemble par ledit au moins un vérin (74, 89).

11. Dispositif d'agrandissement du volume d'un conteneur selon l'une quelconque des revendications précédentes, **caractérisé par le fait que** les vérins (74, 89) sont des vérins hydrauliques à double effet (73, 88).

12. Dispositif d'agrandissement du volume d'un conteneur selon la revendication 11, **caractérisé par le fait que** les vérins hydrauliques (73, 88) sont soumis à la même pression.

13. Dispositif d'agrandissement du volume d'un conteneur selon l'une au moins des revendications 11 ou 12, **caractérisé par le fait que** les tiges de piston (75, 90) des vérins hydrauliques (73, 88) présentent des directions de mouvement opposées lors du pivotement des parties rapportées (37, 38, 39, 40).

14. Dispositif d'agrandissement du volume d'un conteneur selon l'une au moins des revendications 11 à 13, **caractérisé par le fait que** les tiges de piston (75, 90) se déplacent simultanément et à une vitesse approximativement égale.

15. Dispositif d'agrandissement du volume d'un conteneur (24) selon l'une quelconque des revendications précédentes, **caractérisé par le fait qu'**au moins deux parties rapportées (37, 38) sont redressées de manière approximativement verticale au moyen d'une première mécanique de pivotement (55), au moins deux autres parties rapportées (39, 40) étant redressées avec elles, et que, ensuite et/ou simultanément, les deux autres parties rapportées (39, 40) sont ouvertes, au moyen d'une deuxième mécanique de pivotement (54), au-delà de la verticale jusqu'à un deuxième angle d'ouverture (97), les premières parties à rapportées (37, 38) étant redressées avec elles, au-delà de la verticale, jusqu'à un premier angle d'ouverture (98).
